# EUROPEAN PATENT APPLICATION

(11) **EP 3 951 015 A1**
(43) Date of publication of application: **09.02.2022**
(21) Application number: 20782956.5
(22) Date of filing: 18.03.2020
(51) Int. Cl.: C25B 1/06

(54) **IMMERSED DEVICE FOR THE ELECTROLYSIS OF ELECTROLYTIC WATER**

(30) Priority: 03.04.2019 ES 201930304
(71) Applicant: H Inven Grup XXI S.L., 36350 Pontevedra (ES)
(72) Inventor: JOSE ANTONIO, Martínez Cao, 36350 PONTEVEDRA (ES)
(74) Representative: Clarke Modet & Co.
(86) International application number: PCT/ES2020/070189
(87) International publication number: WO 2020/201597

(57) **Abstract**

Device for electrolysis of submerged electrolytic water comprising a reservoir (1) configured to contain electrolytic water, a cooling duct (2) passing through the reservoir (1) with an air impeller element (3) at one end, a cell set (7) configured to perform the electrolytic function, and watertight connection terminals (9), such that each cooling duct (2) houses a heat sink element (4) comprising a plurality of walls (5) configured to absorb heat from the cooling duct (2), and cell set (7) is housed in a casing (10), such that the casing (10) comprises first openings (11) for entry of electrolytic water to the cells (7) and second openings (12) for gas outlet.

## Description

### Field of the invention

The present invention refers to a device for submerged electrolytic water electrolysis that improves the performance of the devices for water electrolysis known in the state of the art with an isolation of the cells where the electrolysis occurs, and an electrolytic water-cooling mechanism located in the reservoir.

### Background of the invention

Electrolysis is the electrochemical obtaining of hydrogen present in water. In said production, both the thermodynamic and kinetic aspects of the reaction play a preponderant role. Especially the latter, since they strongly depend on the composition of the electrode materials, and these in turn influence the economics of the electrolyzer.

Another important aspect is played by the separator, that is, the physical element that keeps the anode compartment isolated from the cathode compartment, avoiding the diffusion of gases. There are physical separators called diaphragms and physical chemical membranes, each with its advantages and disadvantages.

The hydrogen production systems known in the state of the art are mainly divided into two groups, wet cell hydrogen production systems and dry cell hydrogen production systems.

Dry cell systems receive and accommodate the electrolytic water where electrolysis occurs between the hydrogen generation plates, while wet cell systems are incorporated in a reservoir that houses the electrolytic water, and therefore are submerged in said electrolytic water.

Both systems have different peculiarities depending on the application and requirements.

The device object of the invention differs from the two types of hydrogen production systems known in the state of the art and presents substantial constructive improvements allowing a constructive arrangement with the electrical advantages of the dry cell in a wet or submerged system.

### Description of the invention

The device for electrolysis of submerged electrolytic water object of the invention comprises a reservoir configured to contain electrolytic water, a cooling duct passing through the reservoir with an air impeller element at one end, a set of cells configured to perform the electrolytic function and watertight connection terminals configured to supply electricity to the cells.

In the device object of the invention, each cooling duct accommodates a heat sink element comprising a plurality of walls configured to absorb heat from the cooling duct and the set of cells is accommodated in a casing, such that the casing comprises first openings for electrolytic water inlet to the cells and second openings for gas outlet.

In the device for electrolysis of submerged electrolytic water that is the object of the invention, the heat sink element housed in each cooling duct is a cylindrical element in which the walls are radial, and which has a central hole for air passage.

In the device for electrolysis of submerged electrolytic water the cells are formed by parallel planar plates. The parallel planar plates can be rectangular in shape or circular in shape to be positioned longitudinally or transversely in a cylindrical-shaped reservoir.

In the device for electrolysis of submerged electrolytic water, the watertight connection terminals are a single anode and a single cathode located at the beginning and end of the cell set.

### Brief description of the drawings

To complement the following description and in order to help better understand the characteristics of the invention, the present specification is accompanied by a set of drawings on the basis of which the innovations and advantages of the device object of the invention will be more easily understood.

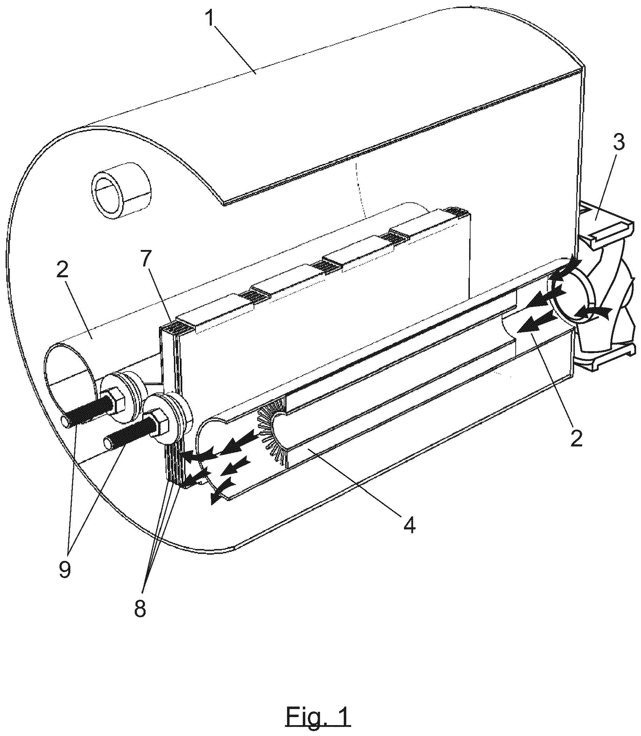

Figure 1 shows a perspective view of the device for electrolysis of electrolytic water that is the object of the invention, showing internal parts of the device.

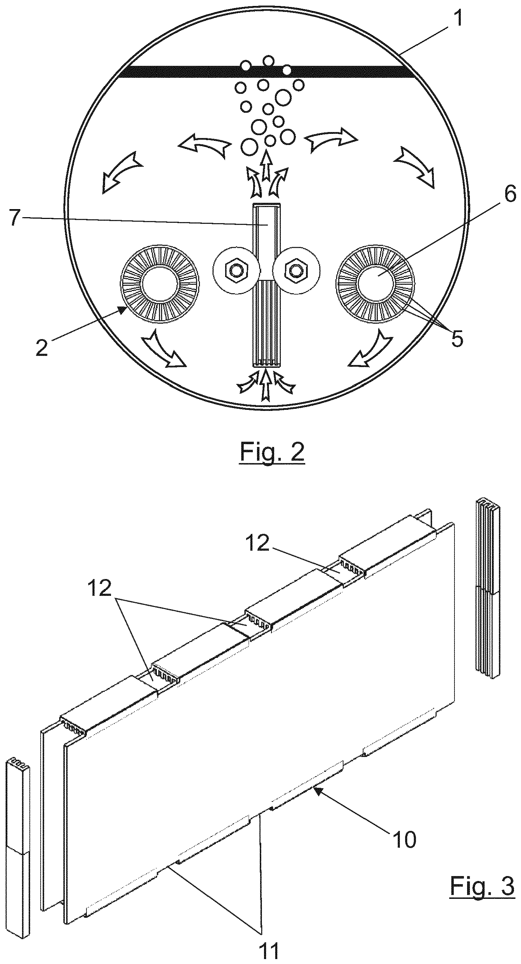

Figure 2 shows a sectional view of the device for electrolysis of electrolytic water that is the object of the invention, showing internal thermodynamic operation.
Figure 3 shows an exploded view of the housing of the cells of the device for electrolysis of electrolytic water that is the object of the invention.

The different numerical references that are reflected in the figure correspond to the following elements:
1. reservoir,
2. cooling duct,
3. air impeller element,
4. heat sink element,
5. wall,
6. central hole,
7. cell,
8. parallel planar plate,
9. watertight connection terminal,
10. casing,
11. first opening, and
12. second opening.

### Detailed description of the invention

The object of the invention is a device for electrolytic submerged water electrolysis that comprises a reservoir (1) where water is housed and an electrolyte forming what is called electrolytic water, so that the electrolytic water allows the electrolysis in an efficient way.

The reservoir (1) of the device that is the object of the invention houses, in the preferred embodiment of the device, two cooling pipes (2) passing through the reservoir (1) and which at one end have an air impeller element (3) introducing air at room temperature inside the cooling duct (2) so that it comes out through the opposite end of the cooling duct (2), extracting with the air circulation, part of the heat generated in the reservoir (1) by conducting electrolysis.

The reservoir (1) of the device object of the invention can be made of different materials, which can be metallic alloys and plastic alloys. In the same way, the size and arrangement of the number of cooling ducts (2) can vary, as well as the shape of the cooling ducts (2), that is, they can be round or square, depending on the interest for the joint shape of the device object of the invention.

The device object of the invention comprises, inside the cooling conduit (2), a heat sink element (4) which in turn comprises a plurality of walls (5) so as said walls (5) offer a heat absorption surface, which accumulates in the cooling ducts (2) surrounding them by carrying out the electrolysis in the electrolytic water, and therefore offers heat evacuation from said cooling duct (2), thus improving the efficiency of the electrolysis of electrolytic water carried out by the device object of the invention.

In the preferred embodiment of the invention, the heat sink element (4) is a cylindrical element in which the walls (5) are radial, and which has a central hole (6) for air passage.

The reservoir (1) of the device object of the invention also houses a plurality of cells (7) where the electrolysis of the electrolytic water takes place. In one embodiment of the invention, the cells (7) are formed by parallel planar plates (8) so electrolysis occurs between every two parallel planar plates (8). The parallel planar plates (8) of the cells (7) receive the electricity to carry out the electrolysis through watertight connection terminals (9).

In a more preferred embodiment of the invention, the parallel planar plates (8) are rectangular in shape.

In the device object of the invention, the cells (7) are encapsulated by an insulating casing (10) leaving only first openings (11) for the entry of water and second openings (12) for gas elimination from their upper part, avoiding that the two outer faces of the cell set (7) remain open and exposed to the electrolytic water of the reservoir (1).

Such casing (10) prevents currents with electron and protons charges from jumping from one end to the other reducing the efficiency of electrolysis. By closing the ends and isolating them electrically, the electrons and protons are forced to pass through the cells (7), exciting the whole assembly, achieving optimal production.

The fact of providing a casing (10) enclosing the cells (7) significantly improves the performance and efficiency of the device for electrolysis of submerged water without presenting the usual problems of systems without casing (10),

This design allows incorporating more or fewer cells (7) as well as varying their sizes and shapes to suit the needs and required powers.

The electrical power connections can be from a single main anode and cathode, located at the beginning and end of cell set (7), multiple connections can also be made for special configurations.

## Claims

1. Device for electrolysis of submerged electrolytic water comprising:
- a reservoir (1) configured to contain electrolytic water,
- a cooling duct (2) passing through the reservoir (1) with an air impeller element (3) at one end,
- a cell set (7) configured to perform the electrolytic function,
- some watertight connection terminals (9),
**characterized by**
- the cooling duct (2) houses a heat sink element (4) comprising a plurality of walls (5) configured to absorb heat from the cooling duct (2), and
- the cell set (7) is housed in a casing (10), such that the casing (10) comprises first openings (11) for entry of electrolytic water to the cells (7) and second openings (12) for gas elimination.

2. Device for electrolysis of submerged electrolytic water, according to claim 1 **characterized in that** the heat sink element (4) is a cylindrical element in which the walls (5) are radial, and which has a central hole (6) for air passage.

3. Device for electrolysis of submerged electrolytic water, according to any of claims 1 or 2, **characterized in that** the cells (7) are formed by parallel planar plates (8).

4. Device for electrolysis of submerged electrolytic water, according to any of claims 1 to 3, **characterized in that** the watertight connection terminals (9) are a single anode and cathode located at the beginning and end of the cell set (7).
